# EUROPÄISCHE PATENTSCHRIFT

(11) **EP 1 925 910 B1**
(45) Veröffentlichungstag und Bekanntmachung des Hinweises auf die Patenterteilung: **18.08.2010**
(21) Anmeldenummer: 06024256.7
(22) Anmeldetag: 23.11.2006
(51) Int. Cl.: G01C 15/00

(54) **Verfahren zur optischen Markierung der vertikalen Projektion ausgewählter Punkte einer virtuellen dreidimensionalen Struktur**
Method for optically marking the vertical projection of selected points of a virtual three-dimensional structure
Procédé destiné au marquage optique de la projection verticale de points sélectionnés sur une structure tridimensionnelle virtuelle

(43) Veröffentlichungstag der Anmeldung: 28.05.2008
(73) Patentinhaber: Maierhofer, Konrad, 83365 Nussdorf (DE)
(72) Erfinder: Maierhofer, Konrad, 83365 Nussdorf (DE)
(74) Vertreter: Möhring, Friedrich

(56) Entgegenhaltungen:
- EP-A- 1 001 251
- EP-A- 1 640 688
- DE-A1- 19 545 589

## Beschreibung

Die vorliegende Erfindung betrifft ein Verfahren zur optischen Markierung der vertikalen Projektion ausgewählter Punkte einer virtuellen dreidimensionalen Struktur auf dem Untergrund, auf dem die Struktur zu errichten ist. Ein solches Verfahren ist z.B. bereits aus der DE 195 45 589 A1 bekannt.

Auf dem Bausektor, insbesondere auf dem Gebiet des Hochbaus, besteht regelmäßig ein Bedarf, die vertikale Projektion ausgewählter Punkte einer zu errichtenden Struktur auf einem Untergrund, auf dem die Struktur zu errichten ist und bei dem es sich typischerweise um eine Bodenplatte bzw. eine Rohdecke handeln kann, zu markieren, um das spätere lagerichtige Errichten der dreidimensionalen Struktur auf dem Untergrund zu erleichtern. Herkömmlicherweise werden hierzu die betreffenden Punkte der Struktur bzw. deren vertikale Projektion auf dem Untergrund von Hand vermessen und dort gekennzeichnet.

Die vorliegende Erfindung zielt darauf ab, ein Verfahren der eingangs genannten Art bereitstellen, mit welchem ausgewählte Punkte einer erst noch zu errichtenden dreidimensionalen Struktur selbst dann, wenn der Untergrund weder exakt eben ist, noch exakt horizontal verläuft, mit geringem Aufwand und gleichzeitig hoher Präzision vertikal auf dem Untergrund projiziert und dort markiert werden können und mit welchem gleichzeitig eine Information über die Lage und Gestalt des Untergrunds erzeugt werden kann.

Gelöst wird diese Aufgabenstellung gemäß der vorliegenden Erfindung durch ein Verfahren gemäß Anspruch 1, welches nachstehend der besseren Verständlichkeit halber zunächst anhand der besonderen Ausführungsform nach Anspruch 2 mit vertikaler Projektion auf einem Untergrund erläutert wird.

Hierbei handelt es sich um ein Verfahren zur optischen Markierung der vertikalen Projektion ausgewählter Punkte einer virtuellen dreidimensionalen Struktur auf dem Untergrund, auf dem die Struktur zu errichten ist, mittels einer mobilen Lasermarkiervorrichtung, die ein auf den Untergrund aufstellbares Stativ und eine Lasermarkiereinheit umfaßt, welche eine mit dem Stativ fest verbundene Basis, einen bezüglich der Basis um zwei Achsen schwenkbaren Kopf mit einer Lasermarkier- und Distanzmeßeinrichtung, zwei das Verschwenken des Kopfes bezüglich der Basis um die beiden Schwenkachsen bewirkende Stellantriebe sowie eine Speicher- und Steuereinrichtung aufweist, mit den folgenden Schritten:
a) Eingeben der auf ein festgelegtes Koordinatensystem bezogenen Koordinaten zumindest der ausgewählten Punkte der dreidimensionalen Struktur in einen Punktespeicher sowie der auf das selbe Koordinatensystem bezogenen Koordinaten mindestens zweier realer Referenzpunkte in einen Referenzspeicher der Speicher- und Steuereinrichtung;
b) Aufstellen der Lasermarkiervorrichtung auf dem Untergrund;
c) manuelles Ausrichten der Lasermarkier- und Distanzmeßeinrichtung auf die mindestens zwei Referenzpunkte und Ermittlung der tatsächlichen Position und Orientierung des Kopfes der Lasermarkiereinheit bezogen auf das Koordinatensystem anhand der Koordinaten der mindestens zwei Referenzpunkte;
d) Berechnen der Koordinaten eines Bildpunktes zu einem ersten ausgewählten Punkt der dreidimensionalen Struktur, die sich von den Koordinaten des zugeordneten ausgewählten Punktes lediglich hinsichtlich der Höhenkoordinate unterscheiden, indem diese auf den Wert der zu erwartenden Höhe des Untergrundes vertikal unter dem ersten ausgewählten Punkt gesetzt wird;
e) Berechnen eines auf die ermittelte tatsächliche Position und Orientierung des Kopfes der Lasermarkiereinheit bezogenen Peilvektors zu dem Bildpunkt des ersten ausgewählten Punktes der dreidimensionalen Struktur;
f) Ansteuern der Stellantriebe für den Kopf der Lasermarkiereinheit gemäß dem zu dem Bildpunkt des ersten ausgewählten Punktes berechneten Peilvektor und Erzeugen eines Leuchtmarkierpunkts auf dem Untergrund mittels der Lasermarkier- und Distanzmeßeinrichtung;
g) Ermitteln der tatsächlichen Entfernung des Leuchtmarkierpunkts auf dem Untergrund vom Kopf der Lasermarkiereinheit mittels der Distanzmeßeinrichtung;
h) automatischer Vergleich der ermittelten tatsächlichen Entfernung des Leuchtmarkierpunkts auf dem Untergrund vom Kopf der Lasermarkiereinheit mit der Länge des berechneten Peilvektors;
i) Berechnen eines korrigierten Peilvektors zu einem korrigierten Bildpunkt, der gegenüber dem Bildpunkt zu dem ersten ausgewählten Punkt in Abhängigkeit von der Abweichung der ermittelten tatsächlichen Entfernung des Leuchtmarkierpunkts auf dem Untergrund vom Kopf der Lasermarkiereinheit von der Länge des berechneten Peilvektors vertikal nach oben oder nach unten verschoben ist;
j) Ansteuern der Stellantriebe für den Kopf der Lasermarkiereinheit gemäß dem zu dem korrigierten Bildpunkt berechneten korrigierten Peilvektor und Erzeugen eines korrigierten Leuchtmarkierpunkts auf dem Untergrund mittels der Lasermarkier- und Distanzmeßeinrichtung;
k) Ermitteln der tatsächlichen Entfernung des korrigierten Leuchtmarkierpunkts auf dem Untergrund vom Kopf der Lasermarkiereinheit mittels der Distanzmeßeinrichtung;
l) erforderlichenfalls Wiederholen der Schritte h) bis k), bis die Abweichung der tatsächlich ermittelten Entfernung des korrigierten Leuchtmarkierpunkts auf dem Untergrund vom Kopf der Lasermarkiereinheit von der Länge des berechneten korrigierten Peilvektors einen vorgegebenen Grenzwert unterschreitet;
m) Wiederholen der Schritte d) bis l) für die weiteren ausgewählten Punkte, wobei die zu mehreren ausgewählten Punkten erzeugten Daten, welche die vertikale Abweichung des endgültigen tatsächlichen Projektionspunktes von dem jeweils zugeordneten (ursprünglichen) Bildpunkt und/oder die Höhenkoordinate des Untergrundes vertikal unter den entsprechenden ausgewählten Punkten repräsentieren, zu einem die Lage und Gestalt der Oberfläche des Untergrundes definierenden Datensatz zusammengefügt werden.

Das erfindungsgemäße Verfahren vollzieht sich, mit anderen Worten, gemäß der nachstehenden Verfahrensanweisung:
Zunächst werden die auf ein beliebig festzulegendes Koordinatensystem bezogenen Koordinaten zumindest der ausgewählten Punkte, deren vertikale Projektion auf dem Untergrund zu markieren ist, in einen entsprechenden Speicher der mobilen Lasermarkiervorrichtung eingegeben. Das selbe gilt für die auf das selbe Koordinatensystem bezogenen Koordinaten mindestens zweier realer Referenzpunkte, unter deren Verwendung zu einem späteren Zeitpunkt, nämlich nachdem die Lasermarkiervorrichtung (z.B. auf einer Baustelle) auf dem Untergrund aufgestellt worden ist, die tatsächliche, auf das Koordinatensystem bezogene Position und Orientierung des Kopfes der Lasermarkiereinheit ermittelt wird. Die Speicher- und Steuereinrichtung der Lasermarkiereinheit muß dabei keineswegs zwingend mit den übrigen Komponenten zur Bildung einer baulichen Einheit dauerhaft fest verbunden sein. Vielmehr kann die Speicher- und ggf. auch die Steuereinrichtung in einem externen, an die übrige Lasermarkiervorrichtung über eine geeignete drahtgebundene oder drahtlose (z.B. Bluetooth, RS232) Datenverbindung angeschlossenen bzw. anschließbaren elektronischen Datenverarbeitungsgerät (z.B. Laptop, PDA, Handheld-Computer) untergebracht sein.

Das Ermitteln der tatsächlichen, auf das Koordinatensystem bezogene Position und Orientierung des Kopfes der Lasermarkiereinheit kann dabei, wie weiter unten in größerem Detail ausgeführt wird, je nach den örtlichen Gegebenheiten auf unterschiedliche Weise erfolgen, insbesondere unter Verwendung von drei oder ggf. auch nur zwei Referenzpunkten. Weiterhin werden zu jedem einzelnen der zuvor ausgewählten Punkte der dreidimensionalen Struktur (entweder vorab gemeinschaftlich oder aber einzeln nacheinander im unmittelbaren Zusammenhang mit der weiteren Verarbeitung der entsprechenden Daten) die Koordinaten eines Bildpunktes berechnet, die sich von den Koordinaten des zugeordneten eigentlichen Punktes lediglich hinsichtlich der Höhenkoordinate unterscheiden, indem diese auf den Wert der zu erwartenden Höhe des Untergrundes vertikal unter dem betreffenden Punkt gesetzt wird; dieser Zwischenschritt kann ersichtlich für solche ausgewählten Punkte der dreidimensionalen Struktur unterbleiben, die bereits mit einer der erwarteten Höhenlage (d.h. dem Sollniveau) des Untergrundes entsprechenden Höhenkoordinate festgelegt sind. Unter Berücksichtigung der vorher ermittelten tatsächlichen Position und Orientierung des Kopfes der Lasermarkiereinheit werden sodann (wiederum entweder vorab gemeinschaftlich oder aber einzeln nacheinander im unmittelbaren Zusammenhang mit der weiteren Verarbeitung der entsprechenden Daten) selbsttätig die Peilvektoren von dem Kopf der Lasermarkiereinheit zu den Bildpunkten zu den zuvor ausgewählten Punkten der dreidimensionalen Struktur berechnet. Ist beispielsweise die vertikale Projektion eines ersten ausgewählten Punktes der dreidimensionalen Struktur mit den Koordinaten x=40, y=60 und z=50 auf dem Untergrund zu markieren und wird die Höhenkoordinate des Untergrundes vertikal unter dem betreffenden ausgewählten Punkt zu zᵤ=-10 erwartet, so werden zur Berechnung des Peilvektors zu dem Bildpunkt des ausgewählten ersten Punktes die Koordinaten x=40, y=60 und z'=-10 zugrundegelegt. Unter entsprechender Ansteuerung der Stellantriebe für den Kopf der Lasermarkiereinheit wird dieser bzw. der erzeugte Laserstrahl sodann gemäß dem berechneten Peilvektor auf den Bildpunkt zu dem ersten der ausgewählten Punkte gerichtet.

Hierzu ist es besonders günstig, wenn die beiden Schwenkachsen, bezüglich derer der Kopf der Lasermarkiereinheit relativ zu deren Basis verschwenkbar ist, zueinander orthogonal verlaufen. Dies ist indessen nicht zwingend; vielmehr läßt sich die Erfindung auch bei einem abweichenden Verlauf der beiden Schwenkachsen umsetzen, wobei in diesem Falle der tatsächliche Achsenverlauf über eine mathematische Korrektur der Daten berücksichtigt wird. Dies ist insbesondere zweckmäßig, wenn eine kostengünstige, auch und gerade hinsichtlich der Orthogonalität der beiden Schwenkachsen mit gröberen Toleranzen behaftete Hardware zum Einsatz kommen soll. In diesem Falle wird jedes einzelne Gerät vermessen und ein das Ergebnis der Messung berücksichtigender Korrekturalgorithmus hinterlegt. Kostenmäßig ist dies durchaus günstiger als die Verwendung von hochpräziser Hardware.

Nun ermittelt die Distanzmeßeinrichtung die Entfernung jenes Leuchtmarkierpunktes, der von dem Laserstrahl der Lasermarkiereinheit auf dem Untergrund erzeugt wird, zum Kopf der Lasermarkiereinheit. Die so ermittelte tatsächliche Entfernung des Leuchtmarkierpunkts auf dem Untergrund vom Kopf der Lasermarkiereinheit wird automatisch mit der Länge des zuvor berechneten Peilvektors verglichen. Eine Abweichung der ermittelten tatsächlichen Entfernung von der Länge des berechneten Peilvektors zeigt an, daß die Höhe des Untergrundes vertikal unter dem ausgewählten ersten Punkt nicht mit dem erwarteten Wert übereinstimmt, beispielsweise weil die den Untergrund bildende Bodenplatte lokale Unebenheiten und/oder eine Neigung aufweist.

Die Richtung und das Maß der Abweichung der ermittelten tatsächlichen Entfernung von der Länge des berechneten Peilvektors gibt an, ob und in welchem Maße der Untergrund an der fraglichen Stelle höher oder aber tiefer ist als erwartet (Sollwert). Unter Berücksichtigung und in Abhängigkeit von der Abweichung der ermittelten tatsächlichen Entfernung des Leuchtmarkierpunkts auf dem Untergrund vom Kopf der Lasermarkiereinheit von der Länge des berechneten Peilvektors wird sodann ein korrigierter Peilvektor zu einem korrigierten Bildpunkt, der gegenüber dem Bildpunkt zu dem ersten ausgewählten Punkt vertikal nach oben oder nach unten verschoben ist, berechnet; die Verschiebung des korrigierten Bildpunktes gegenüber dem (ursprünglichen) Bildpunkt kann dabei insbesondere dergestalt aus dem Unterschied der Höhenkoordinate des Leuchtmarkierpunktes gegenüber der Höhenkoordinate des (ursprünglichen) Bildpunktes abgeleitet werden, daß die Höhenkoordinate des korrigierten Bildpunkts auf die - aus der Richtung des Peilvektors und der tatsächlichen Entfernung des Leuchtmarkierpunktes zum Kopf der Lasermarkiereinheit ermittelbaren-Höhenkoordinate des (ursprünglichen) Leuchtmarkierpunktes auf dem Untergrund gesetzt wird. Die Stellantriebe für den Kopf der Lasermarkiereinheit werden dann gemäß dem zu dem korrigierten Bildpunkt berechneten korrigierten Peilvektor angesteuert, wodurch der Laserstrahl der Lasermarkiereinheit auf dem Untergrund einen korrigierten Leuchtmarkierpunkt erzeugt, der bereits dem gesuchten Projektionspunkt vertikal unter dem ausgewählten Punkt der dreidimensionalen Struktur entspricht oder zumindest signifikant näher an diesem liegt als der ursprüngliche Leuchtmarkierpunkt. Anschließend wird erneut die tatsächliche Entfernung des korrigierten Leuchtmarkierpunkts auf dem Untergrund vom Kopf der Lasermarkiereinheit mittels der Distanzmeßeinrichtung ermittelt und mit der Länge des korrigierten Peilvektors verglichen, und es erfolgt ggf. eine erneute Korrektur der Koordinaten des Bildpunktes. Dieser Vorgang wird erforderlichenfalls so oft wiederholt, bis die Abweichung der tatsächlich ermittelten Entfernung des korrigierten Leuchtmarkierpunkts auf dem Untergrund vom Kopf der Lasermarkiereinheit von der Länge des berechneten korrigierten Peilvektors einen vorgegebenen Grenzwert unterschreitet. Damit ist der gesuchte Projektionspunkt zu dem ersten ausgewählten Punkt der dreidimensionalen Struktur mit der zugrundegelegten Genauigkeit auf dem Untergrund markiert. Die vorstehend dargelegten Schritte werden anschließend für die weiteren ausgewählten Punkte der dreidimensionalen Struktur wiederholt.

Ferner ist erfindungsgemäß vorgesehen, dass jene im Rahmen der vorstehend erläuterten Vorgehensweise zu mehreren ausgewählten Punkten erzeugten Daten, welche jeweils die Höhenkoordinate des Untergrundes vertikal unter verschiedenen Punkten repräsentieren, zu einem die Lage und Gestalt der Oberfläche des Untergrundes definierenden Datensatz zusammengefügt werden. Im Rahmen einer Weiterverarbeitung dieses Datensatzes kann dann beispielsweise eine ebene Fläche definiert werden, welche die tatsächliche Oberfläche des Untergrundes für den jeweiligen spezifischen Anwendungszweck ideal annähert; d.h. es wird ein "Best-Fit" für die Punktewolke gemacht. Dergleichen kann beispielsweise bei der Bestimmung der optimalen weiteren Bearbeitung des Untergrundes, (z.B. durch Aufbringen eines Estrichs) hilfreich sein. Die Anzahl der ausgewählten Punkte richtet sich dabei insbesondere nach der Größe der zu "vermessenden" Oberfläche des Untergrundes sowie der Formhaltigkeit der Oberfläche; bei typischen Anwendungen kann sie beispielsweise zwischen 9 und 20 betragen.

Wie bereits einleitend erwähnt, ist ein der vorliegenden Erfindung in vielerlei Hinsicht vergleichbares Verfahren zur optischen Markierung der vertikalen Projektion ausgewählter Punkte einer dreidimensionalen Struktur auf einem Untergrund auch bereits aus der DE 195 45 589 A1 bekannt. Gegenüber diesem Stand der Technik unterscheidet sich die vorliegende Erfindung zum einen dadurch, dass vorliegend in den Schritten k) und l) die tatsächliche Entfernung des korrigierten Leuchtmarkierpunkts auf der Projektionsfläche vom Kopf der Lasermarkiereinheit ermittelt und erforderlichenfalls die Schritte h) bis j) so oft wiederholt werden, bis der Längenfehler einen vorgegebenen Grenzwert unterschreitet. Demgegenüber findet nach der DE 195 45 589 A1 nur maximal eine Korrektur statt. Zum anderen ist nach der DE 195 45 589 A1 nicht vorgesehen, dass die erzeugten Daten zu den ausgewählten Punkten zu einem die Lage und Gestalt der Projektionsfläche definierenden Datensatz zusammengefügt werden, so dass insoweit keine Informationen zur Verfügung gestellt werden.

Das erfindungsgemäße Verfahren ist erkennbar in besonderer Weise zum Einsatz in solchen Anwendungsfällen geeignet, in denen die zu errichtende dreidimensionale Struktur und insbesondere deren markante Punkte, welche vertikal auf dem Untergrund zu projizieren sind, bereits als Datensatz vorliegen bzw. verfügbar sind, insbesondere als Ergebnis einer computerunterstützen Planung. Unabhängig von der Einhaltung von Toleranzen, was den Untergrund angeht, können unmittelbar, ohne nennenswerten Aufwand und mit hoher Präzision vertikale Projektionen zu ausgewählten Punkten der erst noch zu errichtenden dreidimensionalen Struktur auf dem Untergrund markiert werden. Daß entsprechendes auch für ausgewählte Punkte eines zweidimensionalen Gebildes (z.B. einer Bauzeichnung) gilt, ist nach den vorstehenden Erläuterungen ohne weiteres einsichtig. Insoweit wird im Sinne der vorliegenden Terminologie ein zweidimensionales Gebilde als ein Sonderfall einer dreidimensionalen Struktur betrachtet, für den die beanspruchte technische Lehre unmittelbar anwendbar ist.

Weiter oben wurde dargelegt, daß das Ermitteln der tatsächlichen, auf das Koordinatensystem bezogene Position und Orientierung des Kopfes der Lasermarkiereinheit auf unterschiedliche Weise erfolgen könne. Eine Möglichkeit besteht, wie dies aus dem Bereich der Vermessung bekannt ist, in dem Anpeilen dreier vorgegebener Referenzpunkte mit bekannten Koordinaten, wobei aus den maßgeblichen Winkeln und bevorzugt unter zusätzlicher Auswertung weiterer geometrischer Verhältnisse (z.B. Entfernungen) die genaue Position und Orientierung des Kopfes der Lasermarkiereinheit ermittelt werden kann. Die realen Referenzpunkte brauchen nicht zwingend bestimmten geometrischen Vorgaben zu gehorchen; sie können vielmehr mit der Maßgabe, daß sie von dem Aufstellungsort der Lasermarkiervorrichtung aus sichtbar sein müssen, beliebig angeordnet werden. Eine günstige Möglichkeit sieht vor, daß ein erster Referenzpunkt den Ursprung des Koordinatensystems definiert, ein zweiter Referenzpunkt, in Verbindung mit dem ersten Referenzpunkt, die Richtung einer ersten Achse (z.B. x-Achse) und ein dritter Referenzpunkt, in Verbindung mit dem ersten und dem zweiten Referenzpunkt, die xy-Ebene. Zur Festlegung der realen Referenzpunkte auf der Baustelle kann beispielsweise ein handelsüblicher selbstnivellierender Laserpointer eingesetzt werden.

Im Falle der Verwendung von drei Referenzpunkten, um die tatsächliche, auf das Koordinatensystem bezogene Position und Orientierung des Kopfes der Lasermarkiereinheit zu ermitteln, ist eine Nivellierung der Lasermarkiereinheit nicht erforderlich. Wird die Lasermarkiereinheit indessen nivelliert, so sind insbesondere dann, wenn auch die entsprechenden Entfernungen des Kopfes der Lasermarkiereinheit zu den Referenzpunkten berücksichtigt werden - für die Ermittlung der tatsächlichen Position und Orientierung des Kopfes der Lasermarkiereinheit zwei Referenzpunkte ausreichend.

Besonders bevorzugt weist die mobile Lasermarkiereinrichtung einen Bildschirm auf oder ist an einen solchen anschließbar. Auf dem entsprechenden Bildschirm ist die in einem Strukturspeicher der Lasermarkiereinrichtung mehr oder weniger vollständig hinterlegte dreidimensionale Struktur geeignet so darstellbar, daß jene Punkte (z.B. Ecken, Endpunkte, Punkte auf Kanten, Mittelpunkte), zu denen jeweils die vertikale Projektion auf dem Untergrund zu markieren ist, graphisch ausgewählt werden können, beispielsweise durch Anwählen mit einem Zeigegerät (z.B. mittels Maus oder Touchpad).

Läßt sich in Anwendung der vorliegend dargelegten Verfahrensweise zu einem ausgewählten Punkt ein plausibler korrigierter Bildpunkt nicht ermitteln, weil die tatsächlich ermittelte Entfernung des korrigierten Leuchtmarkierpunkts auf dem Untergrund vom Kopf der Lasermarkiereinheit nicht mit der Länge des berechneten korrigierten Peilvektors in Einklang zu bringen ist, ist dies ein Zeichen für ein den Laserstrahl versperrendes Hindernis (z.B. Betonklumpen, Zweige). In diesem Fall kann bevorzugt eine Fehlermeldung (z.B. optisch und/oder akustisch) erzeugt werden, die auf die genannte Störung der Messung aufmerksam macht und dazu auffordert, den Strahlengang des Laserstrahls auf mögliche Hindernisse zu untersuchen. Die entsprechende Fehlermeldung kann dabei sogar eine aus den vorgenommenen Messungen angeleitete Angabe zu der Entfernung des zu suchenden Hindernisses enthalten.

In Anwendung vorstehend erläuterter Mechanismen und Zusammenhänge lassen sich unter Nutzung derselben technischen Einrichtungen im übrigen nicht nur vertikale Projektionen ausgewählter Punkte einer dreidimensionalen Struktur auf einem Untergrund markieren. Vielmehr sind verschiedene weitere vorteilhafte Nutzungen möglich.

Weiterhin läßt sich aus den vorstehend beschriebenen Gesichtspunkten ableiten, daß sich die dargelegte und erläuterte Erfindung auch auf Projektionen mit einer anderen als einer vertikalen Projektionsrichtung anwenden bzw. übertragen läßt, was mit Anspruch 1 allgemein beansprucht ist. Unter Anwendung einer Koordinatentransformation, die mit den zur Verfügung stehenden technischen Mitteln keinerlei Schwierigkeiten bereitet, kann das erläuterte Verfahren von einer vertikalen Projektion auf einen (mehr oder weniger) horizontalen Untergrund gelöst und in ein Verfahren zur optischen Markierung einer in einer beliebigen Projektionsrichtung erfolgenden Projektion ausgewählter Punkte einer virtuellen dreidimensionalen Struktur auf eine beliebig orientierte Projektionsfläche überführt werden. In diesem Sinne betrifft die vorliegende Erfindung im weiteren Sinne auch ein Verfahren zur optischen Markierung der Projektion ausgewählter Punkte einer virtuellen dreidimensionalen Struktur auf einer bestehenden Projektionsfläche mit einer bestimmten vorgegeben Projektionsrichtung mittels einer mobilen Lasermarkiervorrichtung, die ein Stativ und eine darauf montierte Lasermarkiereinheit umfaßt, welche eine mit dem Stativ fest verbundene Basis, einen bezüglich der Basis um zwei Achsen, insbesondere zwei zueinander orthogonale Achsen, schwenkbaren Kopf mit einer Lasermarkier- und Distanzmeßeinrichtung, zwei das Verschwenken des Kopfes bezüglich der Basis um die beiden Schwenkachsen bewirkende Stellantriebe sowie eine Speicher- und Steuereinrichtung aufweist, mit den folgenden Schritten:
a) Eingeben der auf ein festgelegtes Koordinatensystem bezogenen Koordinaten zumindest der ausgewählten Punkte der dreidimensionalen Struktur in einen Punktespeicher sowie der auf dasselbe Koordinatensystem bezogenen Koordinaten mindestens zweier realer Referenzpunkte in einen Referenzspeicher der Speicher- und Steuereinrichtung;
b) Aufstellen der Lasermarkiervorrichtung;
c) manuelles Ausrichten der Lasermarkier- und Distanzmeßeinrichtung auf die mindestens zwei Referenzpunkte und Ermittlung der tatsächlichen Position und Orientierung des Kopfes der Lasermarkiereinheit bezogen auf das Koordinatensystem anhand der Koordinaten der mindestens zwei Referenzpunkte;
d) Berechnen der Koordinaten eines Bildpunktes zu einem ersten ausgewählten Punkt der dreidimensionalen Struktur, die sich von den Koordinaten des zugeordneten ausgewählten Punktes lediglich hinsichtlich der auf eine vorgegebene, auf der Projektionsrichtung senkrecht stehenden Bezugsebene bezogenen Abstandskoordinate unterscheiden, indem diese auf den Wert des zu erwartenden Abstands der Projektionsfläche von der Bezugsebene in Projektionsrichtung unter dem betreffenden ausgewählten Punkt gesetzt wird;
e) Berechnen eines auf die ermittelte tatsächliche Position und Orientierung des Kopfes der Lasermarkiereinheit bezogenen Peilvektors zu dem Bildpunkten des ersten ausgewählten Punktes der dreidimensionalen Struktur;
f) Ansteuern der Stellantriebe für den Kopf der Lasermarkiereinheit gemäß dem zu dem Bildpunkt des ersten ausgewählten Punktes berechneten Peilvektor und Erzeugen eines Leuchtmarkierpunkts auf der Projektionsfläche mittels der Lasermarkier- und Distanzmeßeinrichtung;
g) Ermitteln der tatsächlichen Entfernung des Leuchtmarkierpunkts auf der Projektionsfläche vom Kopf der Lasermarkiereinheit mittels der Distanzmeßeinrichtung;
h) automatischer Vergleich der ermittelten tatsächlichen Entfernung des Leuchtmarkierpunkts auf der Projektionsfläche vom Kopf der Lasermarkiereinheit mit der Länge des berechneten Peilvektors;
i) Berechnen eines korrigierten Peilvektors zu einem korrigierten Bildpunkt, der gegenüber dem Bildpunkt zu dem ersten ausgewählten Punkt in Abhängigkeit von der Abweichung der ermittelten tatsächlichen Entfernung des Leuchtmarkierpunkts auf der Projektionsfläche vom Kopf der Lasermarkiereinheit von der Länge des berechneten Peilvektors in bzw. entgegen der Projektionsrichtung verschoben ist;
j) Ansteuern der Stellantriebe für den Kopf der Lasermarkiereinheit gemäß dem zu dem korrigierten Bildpunkt berechneten korrigierten Peilvektor und Erzeugen eines korrigierten Leuchtmarkierpunkts auf der Projektionsfläche mittels der Lasermarkier- und Distanzmeßeinrichtung;
k) Ermitteln der tatsächlichen Entfernung des korrigierten Leuchtmarkierpunkts auf der Projektionsfläche vom Kopf der Lasermarkiereinheit mittels der Distanzmeßeinrichtung;
l) erforderlichenfalls Wiederholen der Schritte h) bis k), bis die Abweichung der tatsächlich ermittelten Entfernung des korrigierten Leuchtmarkierpunkts auf der Projektionsfläche vom Kopf der Lasermarkiereinheit von der Länge des berechneten korrigierten Peilvektors einen vorgegebenen Grenzwert unterschreitet;
m) Wiederholen der Schritte d) bis l) für die weiteren ausgewählten Punkte, wobei die zu mehreren ausgewählten Punkten erzeugten Daten, welche die in Projektionsrichtung bestehende Abweichung des endgültigen tatsächlichen Projektionspunktes von dem jeweils zugeordneten (ursprünglichen) Bildpunkt und/oder eine Höhenkoordinate der Projektionsfläche in Projektionsrichtung unter den entsprechenden ausgewählten Punkten repräsentieren, zu einem die Lage und Gestalt der Oberfläche der Projektionsfläche definierenden Datensatz zusammengefügt werden.

Mit der Maßgabe, daß die Projektion nicht "vertikal" gerichtet ist sondern vielmehr normal zu einer (beliebigen) Bezugsebene, gelten für die dieser Definition der vorliegenden Erfindung folgenden Verfahren die weiter oben dargelegten detaillierten Erläuterungen in entsprechender Weise, so daß zur Vermeidung von Wiederholungen auf diese verwiesen wird. Besonders bevorzugte Anwendungsmöglichkeiten von dieser Definition folgenden Verfahren liegen bei der Bearbeitung bereits bestehender Strukturen, beispielsweise der Markierung von Projektionen von vorgebauten Installationseinrichtungen auf Rohbauwänden, welche in diesem Falle die Projektionsflächen bilden. Die Bezugsebene kann dabei insbesondere der Sollage der Projektionsfläche entsprechen. Indessen kann durchaus auch eine hiervon abweichende Auswahl der Bezugsebene sinnvoll sein, beispielsweise indem diese der Sollage der fertigen Struktur (z.B. der verputzten Wand) entspricht.

Lediglich der Klarstellung halber ist darauf hinzuweisen, daß die vorliegende Erfindung keinerlei Einschränkungen unterliegt, was die Auswahl des verwendeten Koordinatensystems (kartesisches System, Zylinderkoordinaten, Polarkoordinaten etc.) betrifft. Ebenso besteht, wie dies bereits weiter oben zum Ausdruck gebracht wurde, ein Spielraum hinsichtlich der Reihenfolge der Durchführung einzelner Schritte des erfindungsgemäßen Verfahrens.

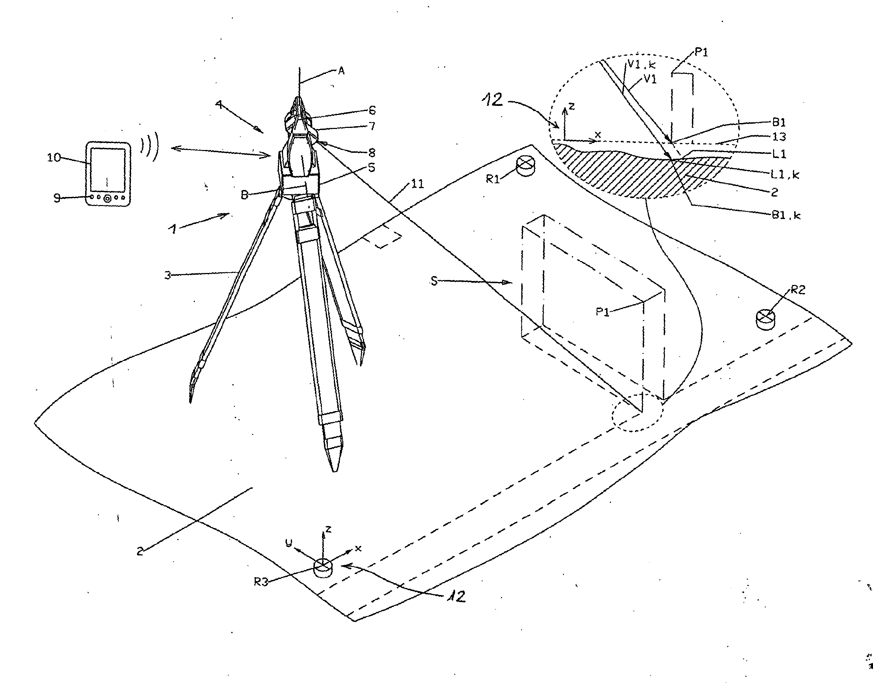

Im folgenden wird die vorliegende Erfindung anhand eines in der Zeichnung dargestellten bevorzugten Ausführungsbeispiels näher erläutert. Dabei veranschaulicht die Zeichnung die Anwendung der Erfindung auf das Markieren der vertikalen Projektion eines ausgewählten Punktes einer dreidimensionalen Struktur auf der Bodenplatte eines zu errichtenden Gebäudes.

Die in der Zeichnung dargestellte mobile Lasermarkiervorrichtung 1 umfaßt ein auf den Untergrund 2 aufstellbares Stativ 3 in Form eines Dreibeins, wie dies von üblichen Teodolithen her bekannt ist, und eine darauf montierte Lasermarkiereinheit 4. Diese weist ihrerseits eine mit dem Stativ 3 fest verbundene Basis 5, ein bezüglich der Basis um die Achse A schwenkbares Zwischenteil 6 und ein in dem Zwischenteil um die zur Schwenkachse A orthogonale Achse B schwenkbar gelagerten Kopf 7 mit einer Lasermarkier- und Distanzmeßeinrichtung 8 auf. Weiterhin umfaßt die Lasermarkiereinheit 4 zwei das Verschwenken des Kopfes 7 bezüglich der Basis 5 um die beiden Schwenkachsen A und B bewirkende (nicht dargestellte) Stellantriebe sowie eine (in der Basis 5 untergebrachte, ebenfalls nicht dargestellte) Steuereinrichtung. Diese steuert insbesondere die beiden das Verschwenken des Kopfes 7 bewirkenden Stellantriebe. Die Lasermarkiereinheit 4 umfaßt ferner, gewissermaßen als externen Bestandteil, einen als solches bekannten PocketPC 9, der über eine drahtlose Verbindung (z.B. Bluetooth) mit den übrigen Komponenten der Lasermarkiereinheit kommuniziert. Der PocketPC umfaßt Speicher für Daten der maßgeblichen dreidimensionalen Struktur S des zu errichtenden Gebäudes einschließlich der Koordinaten ausgewählter Punkte dieser Struktur (Punktespeicher) sowie für real existierende Referenzpunkte R₁, R₂ und R₃, die der Bestimmung der Position und Orientierung des Kopfes 7 der auf den Untergrund 2 aufgestellten Lasermarkiervorrichtung 1 auf der Baustelle dienen (Referenzspeicher). Weiterhin umfaßt der PocketPC 9 die hard- und softwaremäßige Ausstattung, um die im Rahmen des erfindungsgemäßen Verfahrens erfolgenden Auswertungen, Berechnungen und Transformationen durchführen zu können. Die Daten, unter deren Berücksichtigung die beiden Stellantriebe der Lasermarkiereinheit gesteuert werden, werden drahtlos von dem PocketPC 9 an die Steuereinrichtung übertragen. Auf einem Bildschirm 10 des PocketPC 9 ist die gespeicherte dreidimensionale Struktur dergestalt darstellbar, daß sich einzelne Punkte der Struktur für die weitere Verarbeitung, d.h. für das Markieren von deren vertikaler Projektion auf dem Untergrund 2 auswählen lassen. Der PocketPC 9 dient in einem entsprechenden Betriebsmodus auch als Eingabemedium, um - nach dem Aufstellen der Lasermarkiervorrichtung - die Stellantriebe für das manuelle Ausrichten des Kopfes 7 der Lasermarkiereinheit (s.u.) zu steuern.

Nach dem Aufstellen der Lasermarkiervorrichtung 1 auf dem Untergrund 2 wird zunächst der Kopf 7 der Lasermarkiereinheit 4 nacheinander manuell auf die drei Referenzpunkte R₁, R₂ und R₃ ausgerichtet, indem die Referenzpunkte mit dem Laserstrahl 11 der Lasermarkier- und Distanzmeßeinrichtung 8 angepeilt werden. Aus den ermittelten relativen Winkeln zu den drei Referenzpunkten ergibt sich - unter ergänzenden Auswertung der gemessenen Entfernungen - in (aus der Vermessungstechnik) bekannter Weise die tatsächliche Position und Orientierung des Kopfes 7 der Lasermarkiereinheit bezogen auf das zugrundeliegende Koordinatensystem 12. Vorliegend handelt es sich bei dem Koordinatensystem um ein kartesisches Koordinatensystem, wobei die x- und die y-Achse horizontal und die z-Achse vertikal verlaufen. Als Ursprung ist der dritte Referenzpunkt R₃ gewählt, wobei die Höhenkoordinate (z-Koordinate) einer Ebene 13, welche die Solloberfläche und zugleich die zunächst erwartete Oberfläche des Untergrundes 2 definiert, zu Null gesetzt wurde.

Zu einem ersten ausgewählten Punkt P₁ der zu errichtenden dreidimensionalen Struktur S wird zunächst ein Bildpunkt B₁ definiert, dessen Koordinaten (x₁, y₁, z₁') sich von den Koordinaten (x₁, y₁, z₁) des zugeordneten ausgewählten Punktes P₁ lediglich hinsichtlich der Höhenkoordinate unterscheiden, indem diese auf den Wert der zu erwartenden Höhe des Untergrundes 2 vertikal unter dem betreffenden ausgewählten Punkt P₁, vorliegend also z₁'=0 gesetzt wird. Sodann wird ein auf die ermittelte tatsächliche Position und Orientierung des Kopfes 7 der Lasermarkiereinheit 4 bezogener Peilvektor V₁ zu dem Bildpunkt B₁ des ausgewählten Punkts P₁ der dreidimensionalen Struktur S ermittelt. Die Stellantriebe für den Kopf 7 der Lasermarkiereinheit 4 werden nun automatisch gemäß dem zu dem Bildpunkt B₁ des ersten ausgewählten Punktes berechneten Peilvektor V₁ angesteuert. Der Laserstrahl 11 erzeugt auf der Oberfläche des Untergrundes 2 einen Leuchtmarkierpunkt L₁. Mittels der Distanzmeßeinrichtung der Lasermarkiereinheit wird nun automatisch die tatsächliche Entfernung des Leuchtmarkierpunkts L1 vom Kopf 7 der Lasermarkiereinheit 4 ermittelt. Dieser Wert wird automatisch mit der Länge des berechneten Peilvektors V₁ verglichen. In dem in der Zeichnung veranschaulichten Fall ist die tatsächliche Entfernung des Leuchtmarkierpunkts L₁ vom Kopf 7 der Lasermarkiereinheit 4 größer als die Länge des berechneten Peilvektors V₁, und zwar deshalb, weil die tatsächliche Oberfläche des Untergrundes 2 vertikal unterhalb des Punktes P₁ unter jener Ebene 13 liegt, die die Solloberfläche des Untergrundes angibt und auf der der Leuchtmarkierpunkt L₁ deshalb erwartet wurde. Aus der tatsächliche Entfernung des Leuchtmarkierpunkts L₁ vom Kopf 7 der Lasermarkiereinheit 4 und den Daten des Peilvektors V₁ wird automatisch die Höhenkoordinate des Leuchtmarkierpunkts L₁ berechnet, die als z-Koordinate (z_{1,k}) eines korrigierten Bildpunktes B_{1,k} herangezogen wird. Unter Verwendung der Koordinaten (x₁, y₁, z_{1,k}) wird nun automatisch ein korrigierter Peilvektor V_{1,k} zu dem korrigierten Bildpunkt B_{1,k} berechnet, der gegenüber dem Bildpunkt B₁ zu dem ersten ausgewählten Punkt P₁ vertikal nach unten verschoben ist. Die Stellantriebe für den Kopf 7 der Lasermarkiereinheit 4 werden nun gemäß dem zu dem korrigierten Bildpunkt B_{1,k} berechneten korrigierten Peilvektor V_{1,k} angesteuert. Der Laserstrahl 11 erzeugt auf der Oberfläche des Untergrundes 2 einen korrigierten Leuchtmarkierpunkt L_{1,k}. Ab hier wiederholt sich der vorstehend beschriebene Vorgang ggf. mehrfach so lange, bis die Abweichung der tatsächlich ermittelten Entfernung des korrigierten Leuchtmarkierpunkts L_{1,k} auf dem Untergrund 2 vom Kopf 7 der Lasermarkiereinheit 4 von der Länge des berechneten korrigierten Peilvektors V_{1,k} einen vorgegebenen Grenzwert unterschreitet.

Für die weiteren ausgewählten Punkte der Struktur, zu denen ebenfalls eine vertikale Projektion auf dem Untergrund 2 zu markieren ist, wird die vorstehend dargelegte Prozedur in entsprechender Weise abgewickelt.

## Patentansprüche

1. Verfahren zur optischen Markierung der Projektion ausgewählter Punkte (P) einer virtuellen dreidimensionalen Struktur (S) auf einer bestehenden Projektionsfläche (2) mit einer vorgegebenen Projektionsrichtung mittels einer mobilen Lasermarkiervorrichtung (1), die ein Stativ (3) und eine Lasermarkiereinheit (4) umfaßt, welche eine mit dem Stativ (3) fest verbundene Basis (5), einen bezüglich der Basis (5) um zwei Achsen (A, B) schwenkbaren Kopf (7) mit einer Lasermarkier- und Distanzmeßeinrichtung (8), zwei das Verschwenken des Kopfes (7) bezüglich der Basis (5) um die beiden Schwenkachsen bewirkende Stellantriebe sowie eine Speicher- und Steuereinrichtung aufweist, mit den folgenden Schritten:
a) Eingeben der auf ein festgelegtes Koordinatensystem (12) bezogenen Koordinaten zumindest der ausgewählten Punkte (P) der dreidimensionalen Struktur (S) in einen Punktespeicher sowie der auf das selbe Koordinatensystem bezogenen Koordinaten mindestens zweier realer Referenzpunkte (R₁, R₂, R₃) in einen Referenzspeicher der Speicher- und Steuereinrichtung;
b) Aufstellen der Lasermarkiervorrichtung (1);
c) manuelles Ausrichten der Lasermarkier- und Distanzmeßeinrichtung (8) auf die mindestens zwei Referenzpunkte (R₁, R₂, R₃) und Ermittlung der tatsächlichen Position und Orientierung des Kopfes (7) der Lasermarkiereinheit (4) bezogen auf das Koordinatensystem (12) anhand der Koordinaten der mindestens zwei Referenzpunkte (R₁, R₂, R₃) ;
d) Berechnen der Koordinaten eines Bildpunktes (B₁) zu einem ersten ausgewählten Punkt (P₁) der dreidimensionalen Struktur (S), die sich von den Koordinaten des zugeordneten ausgewählten Punktes (P₁) lediglich hinsichtlich der auf eine vorgegebene, auf der Projektionsrichtung senkrecht stehende Bezugsebene bezogenen Abstandskoordinate unterscheiden, indem diese auf den Wert des zu erwartenden Abstands der Projektionsfläche (2) von der Bezugsebene in Projektionsrichtung unter dem betreffenden ausgewählten Punkt gesetzt wird;
e) Berechnen eines auf die ermittelte tatsächliche Position und Orientierung des Kopfes (7) der Lasermarkiereinheit (4) bezogenen Peilvektors (V₁) zu dem Bildpunkt (B₁) des ersten ausgewählten Punktes (P₁) der dreidimensionalen Struktur (S);
f) Ansteuern der Stellantriebe für den Kopf (7) der Lasermarkiereinheit (4) gemäß dem zu dem Bildpunkt (B₁) des ersten ausgewählten Punktes (P₁) berechneten Peilvektor (V₁) und Erzeugen eines Leuchtmarkierpunkts (L₁) auf der Projektionsfläche (2) mittels der Lasermarkier- und Distanzmeßeinrichtung (8);
g) Ermitteln der tatsächlichen Entfernung des Leuchtmarkierpunkts (L₁) auf der Projektionsfläche (2) vom Kopf (7) der Lasermarkiereinheit (4) mittels der Distanzmeßeinrichtung (8);
h) automatischer Vergleich der ermittelten tatsächlichen Entfernung des Leuchtmarkierpunkts (L₁) auf der Projektionsfläche (2) vom Kopf (7) der Lasermarkiereinheit (4) mit der Länge des berechneten Peilvektors (V₁);
i) Berechnen eines korrigierten Peilvektors (V_{1,k}) zu einem korrigierten Bildpunkt (B_{1,k}), der gegenüber dem Bildpunkt (B₁) zu dem ersten ausgewählten Punkt (P₁) in Abhängigkeit von der Abweichung der ermittelten tatsächlichen Entfernung des Leuchtmarkierpunkts (L₁) auf der Projektionsfläche (2) vom Kopf (7) der Lasermarkiereinheit (4) von der Länge des berechneten Peilvektors (V₁) in bzw. entgegen der Projektionsrichtung verschoben ist;
j) Ansteuern der Stellantriebe für den Kopf (7) der Lasermarkiereinheit (4) gemäß dem zu dem korrigierten Bildpunkt (B_{1,k}) berechneten korrigierten Peilvektor (V_{1,k}) und Erzeugen eines korrigierten Leuchtmarkierpunkts (L_{1,k}) auf der Projektionsfläche (2) mittels der Lasermarkier-:und Distanzmeßeinrichtung (8);
k) Ermitteln der tatsächlichen Entfernung des korrigierten Leuchtmarkierpunkts (L_{1,k}) auf der Projektionsfläche (2) vom Kopf (7) der Lasermarkiereinheit (4) mittels der Distanzmeßeinrichtung (8);
l) erforderlichenfalls Wiederholen der Schritte h) bis k), bis die Abweichung der tatsächlich ermittelten Entfernung des korrigierten Leuchtmarkierpunkts (L_{1,k}) auf der Projektionsfläche (2) vom Kopf (7) der Lasermarkiereinheit (4) von der Länge des berechneten korrigierten Peilvektors (V_{1,k}) einen vorgegebenen Grenzwert unterschreitet;
m) Wiederholen der Schritte d) bis l) für die weiteren ausgewählten Punkte, wobei die zu mehreren ausgewählten Punkten (P) erzeugten Daten, welche die in Projektionsrichtung bestehende Abweichung des endgültigen tatsächlichen Projektionspunktes von dem jeweils zugeordneten /ursprünglichen/ Bildpunkt und/oder eine Höhenkoordinate der Projektionsfläche in Projektionsrichtung unter den entsprechenden ausgewählten Punkten repräsentieren, zu einem die Lage und Gestalt der Oberfläche der Projektionsfläche (2) definierenden Datensatz zusammengefügt werden.

2. Verfahren nach Anspruch 1,
**dadurch gekennzeichnet,**
**dass** die Projektion in vertikaler Projektionsrichtung erfolgt, wobei die Projektionsfläche (2) durch den Untergrund (2) der virtuellen dreidimensionalen Struktur (S) gebildet wird, auf welchem das Stativ (3) aufgestellt wird.

3. Verfahren nach Anspruch 1 oder 2,
**dadurch gekennzeichnet,**
**daß** in Schritt c) die Lasermarkier- und Distanzmeßeinrichtung (8) zur Ermittlung der tatsächlichen Position und Orientierung des Kopfes (7) der Lasermarkiereinheit (4) bezogen auf das Koordinatensystem (12) nacheinander auf drei Referenzpunkte (R₁, R₂, R₃) ausgerichtet wird.

4. Verfahren nach einem der Ansprüche 1 bis 3,
**dadurch gekennzeichnet,**
**daß** die zu errichtende dreidimensionale Struktur (S) bzw. die ausgewählten Punkte (P) derselben als Ergebnis einer computerunterstützen Planung als Datensatz vorliegen.

5. Verfahren nach einem der Ansprüche 1 bis 4,
**dadurch gekennzeichnet,**
**daß** die mobile Lasermarkiereinrichtung (1) einen Bildschirm (10) aufweist oder an einen solchen anschließbar ist, auf dem die in einem Strukturspeicher der Lasermarkiereinrichtung hinterlegte dreidimensionale Struktur (S) dergestalt darstellbar ist, daß die ausgewählten Punkte (P) graphisch auswählbar sind.

## Claims

1. Method for the optical marking of the projection of selected points (P) of a virtual three-dimensional structure (S) on an existing projection area (2) with a predetermined projection direction by means of a mobile laser marking device (1), which comprises a tripod (3) and laser marking unit (4), which has a base (5), securely connected with the tripod (3), a head (7) pivotable with respect to the base (5) about two axes (A, B), with a laser marking- and distance measuring arrangement (8), two adjusting drives bringing about the pivoting of the head (7) with respect to the base (5) about the two pivot axes, and a storage- and control arrangement, with the following steps:
a) inputting of the coordinates related to an established coordinate system (12), at least of the selected points (P) of the three-dimensional structure (S) into a point memory and of the coordinates related to the same coordinate system at least of two actual reference points (R₁, R₂, R₃) into a reference memory of the memory- and control arrangement;
b) positioning of the laser marking device (1);
c) manual aligning of the laser marking- and distance measuring arrangement (8) to the at least two reference points (R₁, R₂, R₃) and determining the actual position and orientation of the head (7) of the laser marking unit (4) in relation to the coordinate system (12) by means of the coordinates of the at least two reference points (R₁, R₂, R₃);
d) calculating the coordinates of an image point (B₁) to a first selected point (P₁) of the three-dimensional structure (S), which differ from the coordinates of the associated selected point (P₁) only with regard to the distance coordinates related to a predetermined reference plane standing perpendicularly on the projection direction, being set to the value of the distance to be expected of the projection area (2) from the reference plane in the projection direction under the respective selected point;
e) calculating a bearing vector (V₁) related to the determined actual position and orientation of the head (7) of the laser marking unit (4) to the image point (B₁) of the first selected point (P₁) of the three-dimensional structure (S);
f) actuating the adjusting drives for the head (7) of the laser marking unit (4) according to the bearing vector (V₁) calculated to the image point (B₁) of the first selected point (P₁) and producing a light marking point (L₁) on the projection area (2) by means of the laser marking- and distance measuring arrangement (8);
g) determining the actual distance of the light marking point (L₁) on the projection area (2) from the head (7) of the laser marking unit (4) by means of the distance measuring arrangement (8) ;
h) automatic comparison of the determined actual distance of the light marking point (L₁) on the projection area (2) from the head (7) of the laser marking unit (4) with the length of the calculated bearing vector (V₁);
i) calculating a corrected bearing vector (V_{2,k}) to a corrected image point (B_{1,k}) which is displaced with respect to the image point (B₁) to the first selected point (P₁) as a function of the deviation of the determined actual distance of the light marking point (L₁) on the projection area (2) from the head (7) of the laser marking unit (4) from the length of the calculated bearing vector (V₁) in or contrary to the projection direction;
j) actuating the adjusting drives for the head (7) of the laser marking unit (4) according to the corrected bearing vector (V_{1,k}) calculated to the corrected image point (B_{1,k}) and producing a corrected light marking point (L_{1,k}) on the projection area (2) by means of the laser marking- and distance measuring arrangement (8);
k) determining the actual distance of the corrected light marking point (L_{1,k}) on the projection area (2) from the head (7) of the laser marking unit (4) by means of the distance measuring arrangement (8);
l) if necessary, repeating the steps h) to k), until the deviation of the actually determined distance of the corrected light marking point (L_{1,k}) on the projection area (2) from the head (7) of the laser marking unit (4) from the length of the calculated corrected bearing vector (V_{1,k}) falls below a predetermined threshold value;
m) repeating of steps d) to l) for the further selected points, wherein the data produced for several selected points (P), which represent the deviation, existing in the projection direction, of the final actual projection point from the respectively associated original image point and/or a height coordinate of the projection area in the projection direction under the corresponding selected points, are joined together to a data set defining the position and form of the surface of the projection area (2).

2. Method according to Claim 1,
**characterized in that**
the projection takes place in vertical projection direction, wherein the projection area (2) is formed by the background (2) of the virtual three-dimensional structure (S), on which the tripod (3) is positioned.

3. Method according to Claim 1 or 2,
**characterized in that**
in step c) the laser marking- and distance measuring arrangement (8) for determining the actual position and orientation of the head (7) of the laser marking unit (4) in relation to the coordinate system (12) is aligned in succession to three reference points (R₁, R₂, R₃).

4. Method according to one of Claims 1 to 3,
**characterized in that**
the three-dimensional structure (S) which is to be erected or respectively the selected points (P) thereof, are present as a data set as the result of a computer-assisted design.

5. Method according to one of Claims 1 to 4,
**characterized in that**
the mobile laser marking arrangement (1) has a screen (10) or is able to be connected to such a screen, on which the three-dimensional structure (S), deposited in a structure memory of the laser marking arrangement, is able to be represented such that the selected points (P) are able to be selected graphically.

## Revendications

1. Procédé pour le marquage optique de la projection de points sélectionnés (P) d'une structure (S) tridimensionnelle virtuelle sur une surface de projection (2) existante avec une direction de projection prédéfinie au moyen d'un dispositif de marquage à laser (1) mobile, qui comporte un pied (3) et une unité de marquage à laser (4), laquelle présente une base (5) reliée de façon fixe au pied (3), une tête (7) pivotante par rapport à la base (5) autour de deux axes (A, B), avec un dispositif de marquage à laser et de mesure de distance (8), deux servocommandes entraînant le basculement de la tête (7) par rapport à la base (5) autour des deux axes de pivotement et un dispositif de mémoire et de commande, présentant les étapes suivantes :
a) entrée des coordonnées rapportées à un système de coordonnées (12) défini d'au moins les points (P) sélectionnés de la structure (S) tridimensionnelle dans une mémoire de points et des coordonnées rapportées au même système de coordonnées d'au moins deux points de référence réels (R₁, R₂, R₃), dans une mémoire de référence du dispositif de mémoire et de commande ;
b) installation du dispositif de marquage à laser (1) ;
c) alignement manuel du dispositif de marquage à laser et de mesure de distance (8) sur les au moins deux points de référence (R₁, R₂, R₃) et détermination de la position réelle et orientation de la tête (7) de l'unité de marquage à laser (4) par rapport au système de coordonnées (12) à l'aide des coordonnées des au moins deux points de référence (R₁, R₂, R₃) ;
d) calcul des coordonnées d'un point d'image (B₁) pour un premier point (P₁) sélectionné de la structure (S) tridimensionnelle, qui se différencient des coordonnées du point (P₁) sélectionné associé uniquement en ce qui concerne la coordonnée de distance rapportée à un plan de référence prédéfini, perpendiculaire à la direction de projection, par le fait que cette coordonnée est placée sur la valeur de la distance à escompter de la surface de projection (2) au plan de référence dans la direction de projection sous le point sélectionné concerné ;
e) calcul d'un vecteur de repérage (V₁) rapporté à la position réelle déterminée et à l'orientation de la tête (7) de l'unité de marquage à laser (4) pour le point d'image (B₁) du premier point (P₁) sélectionné de la structure (S) tridimensionnelle ;
f) amorçage des servocommandes pour la tête (7) de l'unité de marquage à laser (4) selon le vecteur de repérage (V₁) calculé pour le point d'image (B₁) du premier point (P₁) sélectionné et génération d'un point de marquage lumineux (L₁) sur la surface de projection (2) au moyen du dispositif de marquage à laser et de mesure de distance (8) ;
g) calcul de la distance réelle du point de marquage combiné (L₁) sur la surface de projection (2) à la tête (7) de l'unité de marquage à laser (4) au moyen du dispositif de mesure de distance (8) ;
h) comparaison automatique de la distance réelle calculée du point de marquage lumineux (L₁) sur la surface de projection (2) à la tête (7) de l'unité de marquage à laser (4) avec la longueur du vecteur de repérage (V₁) calculé ;
i) calcul d'un vecteur de repérage (V_{1,k}) corrigé pour un point d'image (B_{1,k}) corrigé, qui est décalé par rapport au point d'image (B₁) pour le premier point (P₁) sélectionné en fonction de l'écart entre la distance réelle calculée du point de marquage lumineux (L₁) sur la surface de projection (2) à la tête (7) de l'unité de marquage à laser (4) et la longueur du vecteur de repérage (V₁) calculé dans la direction de projection ou dans le sens contraire au sens de projection ;
j) amorçage des servocommandes pour la tête (7) de l'unité de marquage à laser (4) selon le vecteur de repérage (V_{1,k}) corrigé, calculé pour le point d'image (B_{1,k}) corrigé et génération d'un point de marquage lumineux (L_{1,k}) corrigé sur la surface de projection (2) au moyen du dispositif de marquage à laser et de mesure de distance (8) ;
k) détermination de la distance réelle du point de marquage lumineux (L_{1,k}) corrigé sur la surface de projection (2) à la tête (7) de l'unité de marquage à laser (4) au moyen du dispositif de mesure de distance (8) ;
l) si nécessaire, répétition des étapes h) à k) jusqu'à ce que l'écart entre la distance calculée réellement du point de marquage lumineux (L_{1,k}) corrigé sur la surface de projection (2) à la tête (7) de l'unité de marquage à laser (4) et la longueur du vecteur de repérage (V_{1,k}) corrigé et calculé est inférieure à une valeur limite prédéfinie ;
m) répétition des étapes d) à l) pour les autres points sélectionnés, les données générées pour plusieurs points (P) sélectionnés, qui représentent l'écart existant dans le sens de projection du point de projection réel définitif par rapport au point d'image initial respectivement attribué et/ou une coordonnée de hauteur de la surface de projection dans le sens de projection sous les points sélectionnés correspondants, étant assemblées pour former un ensemble de données définissant la position et la forme de la surface de la surface de projection (2).

2. Procédé selon la revendication 1,
**caractérisé en ce que**
la projection s'effectue dans le sens de projection vertical, la surface de projection (2) étant formée par le substrat (2) de la structure (S) tridimensionnelle virtuelle, sur lequel le pied (3) est installé.

3. Procédé selon la revendication 1 ou 2,
**caractérisé en ce que,**
à l'étape c), le dispositif de marquage à laser et de mesure de distance (8) est aligné pour déterminer la position réelle et l'orientation de la tête (7) de l'unité de marquage à laser (4) par rapport au système de coordonnées (12) successivement sur trois points de référence (R₁, R₂, R₃).

4. Procédé selon l'une quelconque des revendications 1 à 3,
**caractérisé en ce que**
la structure (S) tridimensionnelle à installer ou les points (P) sélectionnés de cette structure sont présents comme résultat d'une conception assistée par ordinateur sous forme d'ensemble de données.

5. Procédé selon l'une quelconque des revendications 1 à 4,
**caractérisé en ce que**
le dispositif de marquage à laser (1) mobile présente un écran (10) et peut être raccordé à un tel écran sur lequel la structure (S) tridimensionnelle, déposée dans une mémoire de structure du dispositif de marquage à laser peut être représentée de telle sorte que les points (P) sélectionnés peuvent être sélectionnés graphiquement.
